# EUROPEAN PATENT SPECIFICATION

(11) **EP 0 714 581 B1**
(45) Date of publication and mention of the grant of the patent: **17.11.1999**
(21) Application number: 94915250.8
(22) Date of filing: 26.05.1994
(51) Int. Cl.: H04N 7/00, H04N 7/084

(54) **START CODE FOR SIGNALLING BITS**
STARTKODE FÜR SIGNALISIERUNGSBITS
CODE DE DECLENCHEMENT POUR BITS DE SIGNALISATION

(30) Priority: 26.05.1993 EP 93201514
(43) Date of publication of application: 05.06.1996
(73) Proprietor: Koninklijke Philips Electronics N.V., 5621 BA Eindhoven (NL); PHILIPS NORDEN AB, 164 85 Stockholm (SE)
(72) Inventor: TICHELAAR, Johannes, Yzebrand, NL-5621 BA Eindhoven (NL); BERGEN, Franciscus, Herman, Maria, NL-5683 LB Best (NL); ULTEE, Jilles, NL-5527 HW Hapert (NL); VAN OVERMEIRE, Philippe, Antoine, Maurice, B-9041 Gent (BE)
(74) Representative: Steenbeek, Leonardus Johannes
(86) International application number: IB9400125
(87) International publication number: WO9428678

(56) References cited:
- EP-A- 0 505 659
- EP-A- 0 546 628
- WO-A-90/14732

## Description

The invention relates to a extended television signal comprising signalling bits for conveying control information to control an extended decoder.

Such an extended television signal has been described in the German patent application DE-A-41.12.712. This prior art document discloses a signalling bits signal comprising run-in information data, start information data, and useful information data. The run-in information data comprise eight sine oscillations for synchronising a phase-locked loop. The start information data serve for addressing the useful information data and for catching the start of the useful information data. As soon as the receiver determines the presence of recognition data in the input signal, the receiver is able to process the useful information data with the correct phase. No further details with regard to the start information data are given. The useful information data are, for example, bi-phase coded. The signal is DC-free to facilitate magnetic recording.

It is, *inter alia,* an object of the invention to provide an extended television signal having signalling bits which are reliably decodable under severe circumstances. To this end, one aspect of the invention provides an extended television signal as defined in claim 1. A second aspect of the invention provides an extended television signal decoder as defined in claim 13. A third aspect of the invention provides a method of decoding an extended television signal as defined in claim 22. Advantageous embodiments of the invention are defined in the subclaims.

The extended television signal in accordance with the invention comprises signalling bits for conveying control information to control an extended decoder, wherein the signalling bits comprise a start code and data bits, the start code's main lobe of spectral energy resides in the lower spectral area of a baseband television signal below 2 MHz and preferably below 1.7 MHz, the start code is preferably (almost) DC-free, and the start code has good aperiodic correlation properties and a predetermined minimum bit Hamming distance (in number of bit coincidences) to the data bits when shifted towards or over the data bits following the start code.

The start code selected according to the these criteria appeared to yield a very reliable decodable extended television signal even under severe circumstances. It is to be noted that the expressions (almost) DC-free or a spectral minimum at zero frequency do not necessarily imply that the signalling bits or its start code part are centered around a zero voltage level; the signalling bits may have a voltage offset. Aperiodic correlation is another expression for autocorrelation, as explained on page 346 of R.E. Ziemer and W.H. Tranter, Principles of Communications, systems, modulation, and noise, Houghton Mifflin Company, Boston USA, 2nd edition 1976. In the context of this application, a code can be said to have good aperiodic correlation properties when the autocorrelation of the code, normalized to a global maximum of one at zero delay, shows a difference of at least one half between the global maximum and any local maxima. It appeared to be sufficient if the predetermined minimum bit Hamming distance of the start code to the data bits is one, while a preferred minimum bit Hamming distance of the start code to the data bits is three.

These and other aspects of the invention will be apparent from and elucidated with reference to the embodiments described hereinafter.

In the drawings:
Fig. 1 shows a preferred power spectral density (PSD) of the signalling bits;
Fig. 2 shows the last part of the run-in, and the start code;
Fig. 3-5 show embodiments of a wide screen signalling bits decoder;
Fig. 6 shows a block diagram of start code detection;
Fig. 7 shows a block diagram of a first data bit estimator embodiment;
Fig. 8 shows a block diagram of a second data bit estimator embodiment;
Fig. 9 shows the position of the Wide Screen Signalling bits in line 23;
Fig. 10 shows an example of bi-phase-L modulation coding;
Fig. 11 shows a wide screen signalling bits transmission scheme table; and
Fig. 12 shows examples of letterbox signals with logos and subtitling.

The Proposal for Wide Screen Signalling Bits (below), which forms an integral part of the present disclosure, describes a proposal for standardization of transmitting signalling information to a TV receiver. This signalling information contains the aspect ratio, some enhanced services, subtitles, etc. The proposal is developed for broadcasting (terrestrial, satellite, cable etc.) only, as well as for such broadcasting in combination with VCR's. Even under the condition of the replay of a copy of a VCR recording of the broadcasted signalling bits, the signalling bits should be reliably decodable. To meet the requirement that the signalling bits are reliably decodable under such severe conditions (VCR's), one aspect of the invention provides that the main spectral energy of the signalling bits resides in the lower spectral area of baseband video, below 2 MHz and preferably below 1.7 MHz. This frequency constraint can be met by the requirement that at a 5 MHz sample rate, at least three successive channel bits should each time be equal to each other. On the other hand, it appeared that making a higher number of successive channel bits each time equal to each other yields little improvement in detection reliability but, of course, restricts the number of transferable bits.

It is noted that this upper frequency limitation requirement differs substantially from the characteristics of, for example, teletext and Video Program System (VPS) signals. Both prior art signal spectra have frequencies up to 5 MHz, a main lobe of the VPS spectrum being at about 2.5 MHz which is believed to be far too high for the signalling bits start code.

The signalling bits include a start code and data bits, preferably preceded by a run-in. The invention is based on the recognition that to meet the object of the invention, *i.e.,* to obtain very reliably decodable signalling bits, the start code should have the following characteristics:
1. The start code's main lobe of spectral energy should reside in the lower spectral area of baseband video (which is also required for the data bits) below 2 MHz. Eg., this lower spectral area is about 0 - 1.7 MHz. Further, the start code should preferably have a local spectral minimum at DC.
2. The start code should have good aperiodic correlation properties.
3. The start code should have some minimum distance (in number of bit coincidences) when shifted over the data bits transmitted directly after the start code. This could be implemented by coding the start code slightly different from the bi-phase modulation code of the data bits (see the Proposal for Wide Screen Signalling bits below).

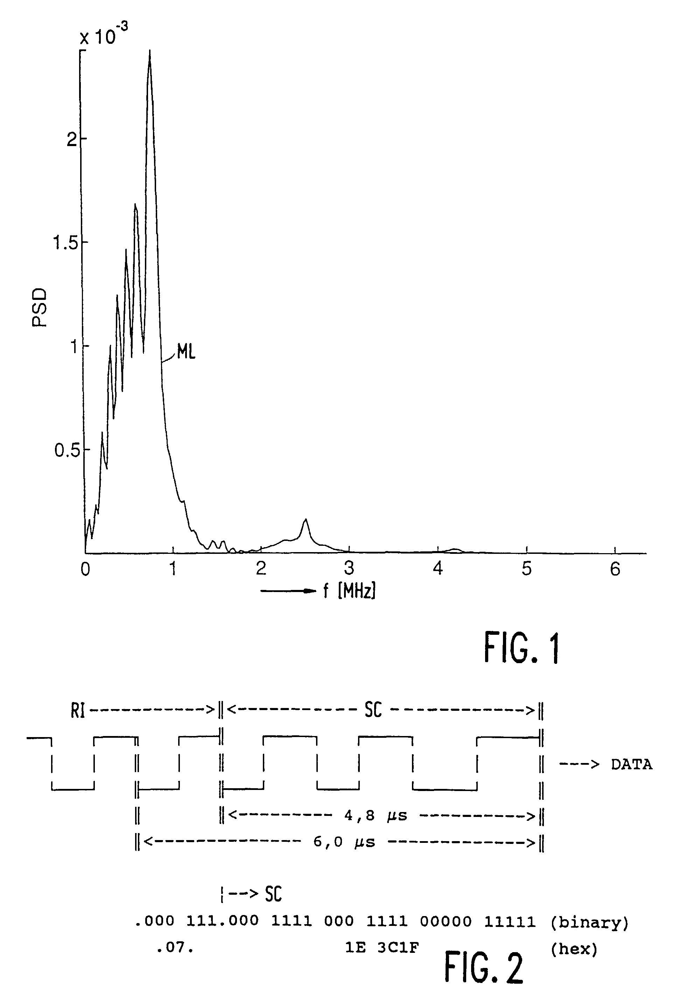

Items 1 (no high frequencies) and 2 (good autocorrelation properties) are in practice difficult to combine. A good compromise has been found, in which the start code has a frequency peak at about 900 kHz and a main lobe ML of spectral energy in a frequency area below 1.7 MHz, above which only about 6% of the signal energy is present, see the power spectral density versus frequency graph of Fig. 1. As shown in Fig. 1, the WSS preferably have a spectral minimum at about 1.7 MHz to reduce group delay distortions and disadvantages caused by amplitude attenuations which may exceed 27 dB occurring at the maximum frequency (2-2.5 MHz) which VHS video recorders allow to pass when a copy is made of an already recorded original.

The extended television signal as defined in claim 3 provides an enhanced detection reliability. In case of an undisturbed signal, a minimum bit Hamming distance of the start code to the run-in of one is sufficient, while a preferred minimum bit Hamming distance of the start code to the run-in is six.

In Fig. 2, one example of the last part of the run-in RI as well as the start code SC is presented. In accordance with an embodiment of the present invention, the start code is based on inverted Barker codes (see R.E. Ziemer and W.H. Tranter, Principles of Communications, systems, modulation, and noise, Houghton Mifflin Company, Boston USA, 2nd edition 1976) of length 4 and 5, in order to meet the second characteristic.

As listed in Ziemer and Tranter, page 346, the following Barker sequences are known:

| | | | | | | | | | | | | | |
|---|---|---|---|---|---|---|---|---|---|---|---|---|---|
| B1 | 1 | 0 | | | | | | | | | | | |
| B3 | 1 | 1 | 0 | | | | | | | | | | |
| B4 | 1 | 1 | 0 | 1 | | | | | | | | | |
| B5 | 1 | 1 | 1 | 0 | 1 | | | | | | | | |
| B7 | 1 | 1 | 1 | 0 | 0 | 1 | 0 | | | | | | |
| B11 | 1 | 1 | 1 | 0 | 0 | 0 | 1 | 0 | 0 | 1 | 0 | | |
| B13 | 1 | 1 | 1 | 1 | 1 | 0 | 0 | 1 | 1 | 0 | 1 | 0 | 1 |

The inverted bit sequences (0 and 1 interchanged), the reversed bit sequences (the above sequences when read from right to left), and the bit sequences which are both inverted and reversed are also appropriate.

As an alternative to Barker codes, pseudo-noise codes and digital sequences derived from Hadamard matrices (also mentioned in Ziemer and Tranter) can be used.

The inverted Barker code of length 4 is [0010] and of length 5 [00010]. The embodiment shown is based on the recognition that the Barker code of length 4 (B4) is a subset of the Barker code of length 5 (B5). (Similarly, the Barker sequence of lengths 2, 3 and 4 are subsets of the Barker sequences of lengths 3, 4 and inverted 7, respectively.) The inverted Barker code has been convolved with a kind of bi-phase modulation code in order to meet the first characteristic, as shown below:

[1] → [1 1 1 0 0 0]

[0] → [0 0 0 1 1 1].

After this modulation coding, the result looks like the following:

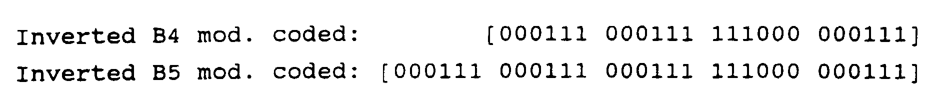

The start code given in Fig. 2, is based on the inverted Barker length 4 code. If this start code is extended by the last 6 bits of the run-in (see Fig. 2), then it can be extended to the inverted Barker code of length 5. In order to meet the third characteristic, small changes are introduced to the (kind of) bi-phase modulated inverted Barker sequences. The final result is given by:

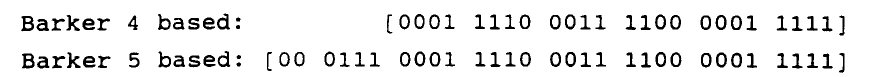

The Barker 4 based start code gives an overall minimum bit Hamming distance 3, and a minimum bit Hamming distance 6 to the run-in and the start code only. The Barker 5 based start code gives an overall minimum bit Hamming distance 5, and a minimum bit Hamming distance 8 to the run-in and start code only. By selecting nested Barker sequences in accordance with the present embodiment of the invention, it becomes possible to provide decoders which do not just use the start code, but which rely on the combination of the start code and the tail of the run-in, and which thus are able to benefit from the increased bit Hamming distances and increased detection reliability associated with the longer, Barker 5 sequence.

In order to make sure that a phase locked loop (PLL) can obtain acquisition from and lock to the run-in, the run-in should have at least 8 transients. The following run-in resulted:

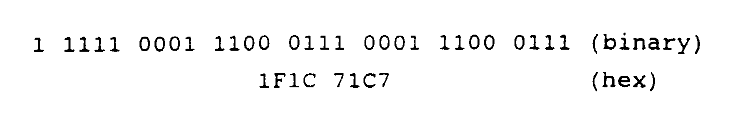

### The WSS-decoder.

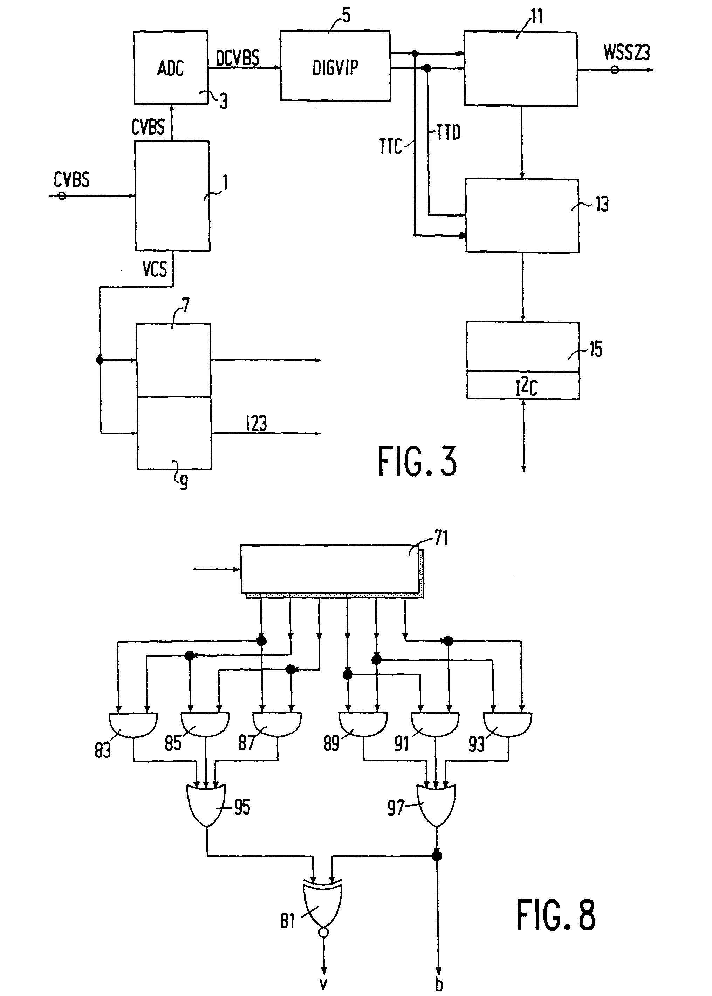

In Fig. 3, a scheme is presented which shows the basic blocks of the Wide Screen Signalling (WSS) decoder. This circuitry shown is part of a device which is used for decoding of several data processes in a television signal, like teletext, VPS, etc. Within the context of this application, we concentrate on WSS.

The composite video baseband signal (CVBS) is fed into a (state of the art) input clamp and sync separator circuit 1. The sync separator I slices the composite video to give a separate video composite sync (VCS) for line timing and field timing. The clamped CVBS is applied to a video analog to digital converter (ADC) 3 which outputs digital CVBS (DCVBS) at a sample frequency of 13.5 MHz. The DCVBS is applied to a digital video input processor (DIGVIP) 5. This DIGVIP 5 includes a state of the art adaptive clock regenerator circuit which exists of a combination of an adaptive slicer, a digital phase lock loop (DPLL) and sampler. The DPLL locks on the data input signal with a sample frequency of 5 MHz (in the case of WSS in line 23!). The output of the DIGVIP 5 carries hard decoded estimates of the 5 MHz grid data samples. This DIGVIP output has been realised by two output lines: TTD and TTC. TTD carries a binary data stream with a clock frequency of 13.5 MHz. TTC is a data clock line with a clock frequency of 13.5 MHz. TTC determines with a low to high transient that a corresponding TTD sample is a valid sample. Hence, in the case of WSS almost every second sample of TTD is a valid sample.

The line timing circuit 7 and field timing circuit 9 generate timing windows for wide screen signalling in line 23. The occurrence (123) of line 23 is signalled to the DIGVIP 5 so that it can switch the DPLL's discrete time oscillator (DTO) to 5 MHz. A timing window is generated for the run-in and the head of the start-code of WSS. The gain of the PLL loop is lowered when this window is active in order to obtain fast acquisition and lock. A start-code timing window is generated to enable the start-code detection process. This start-code timing window should have a timing tolerance of at least ± 4 µs. This tolerance, which has been determined by practice, is absolutely necessary in the case that a VCR signal is input. The explanation is that the VCR's head switch introduces a residual timing error in line 23. This timing error is even worse when a tape exchange has occurred or when the VCR is replaying a copy tape with WSS.

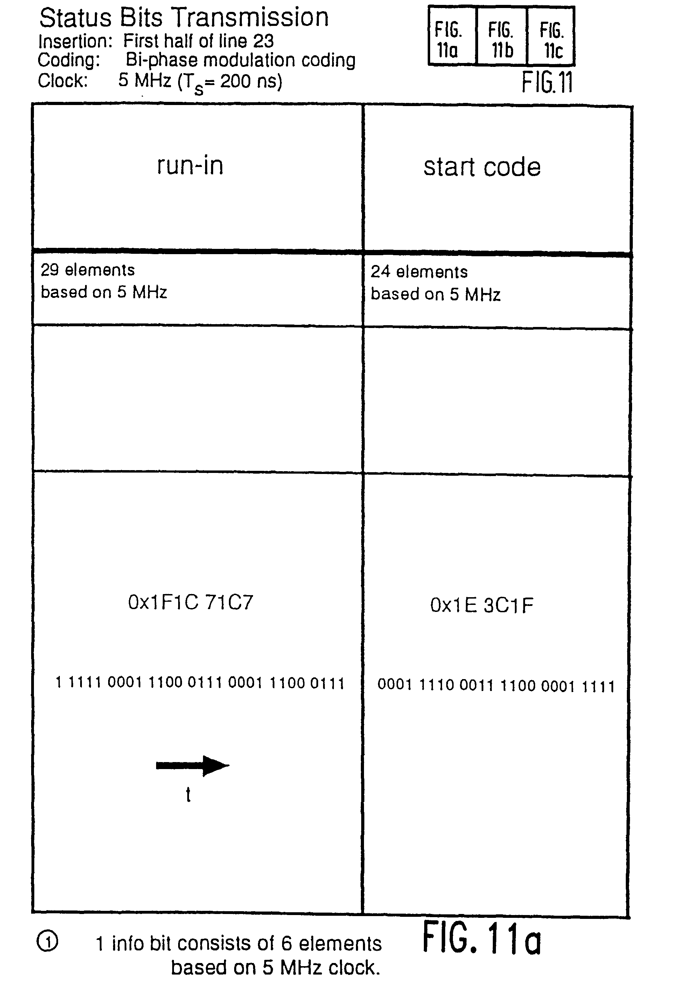

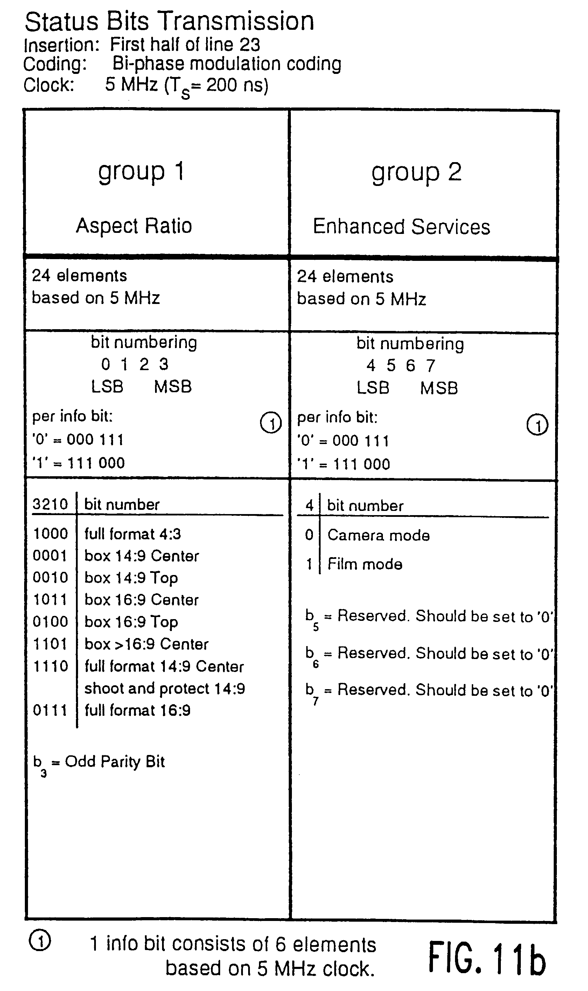

The output lines TTD and TTC of DIGVIP 5 are applied to a block start-code detector 11. This block will be explained in detail below. If the start-code detection circuit 11 detects a start-code then the timing of WSS is assumed to be estimated and a "WSS line 23 detected" signal WSS23 is produced. Since we have knowledge about the relative position of the data referred to the start-code, we have now an estimate of the timing of the WSS data. The WSS data estimation process is now activated. How this estimation is done will be explained in detail below. The output of the WSS data estimator 13 will be 14 data bits and 14 corresponding violation flags. When a violation flag is set, it means that the corresponding data bit might be unreliable. Fig. 11 shows under the headings "group 1" to "group 4" one example for the significance which can be assigned to the 14 data bits 0 through 13.

The 14 data bits and 14 violation flags are stored into a buffer 15 and can be addressed by the outer world, a TV-set, via IIC communication. Now, within the TV-set, the WSS data can be evaluated and further processed. The violation flags are used as a means to gain knowledge about the reliability of the input WSS signal in order to determine a strategy for further processing.

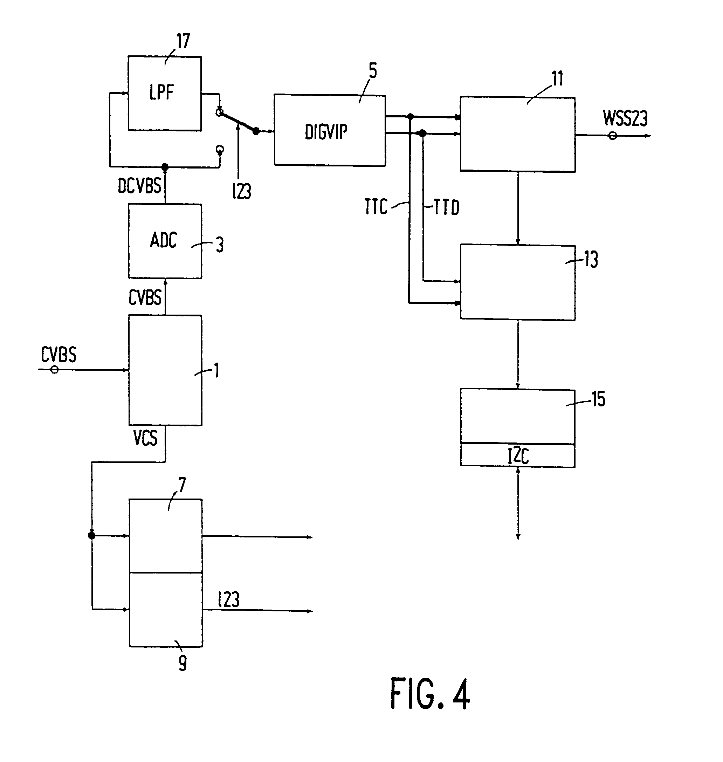

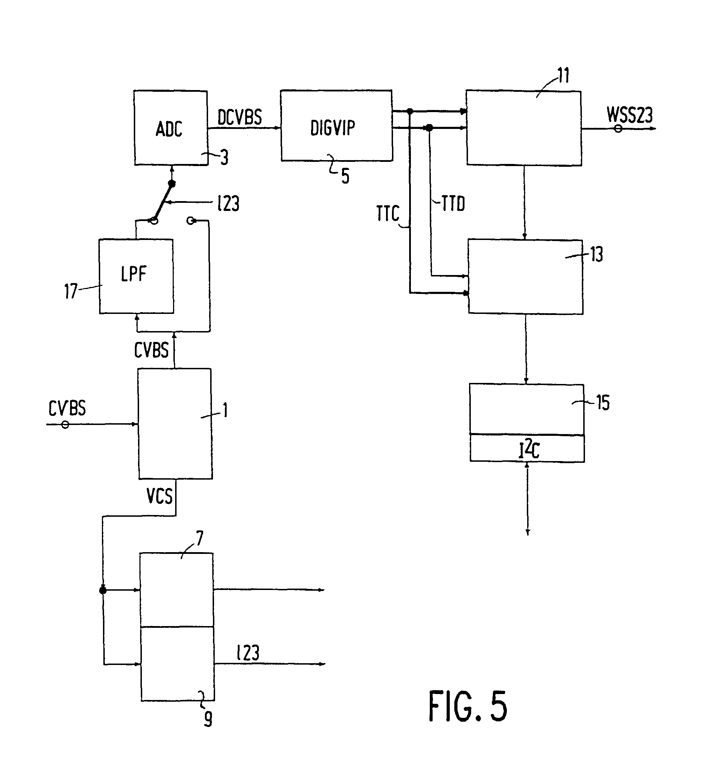

In Figs. 4, 5, alternative WSS-decoder circuits are presented. The main difference is the inclusion of a decoder low-pass input filter 17. In Fig. 4, it is a digital filter between the ADC 3 and the DIGVIP 5, and in Fig. 5 it is an analog filter between the input clamp and sync separation circuit 1 and the ADC 3. In both cases, a switch controlled by the line 23 signal 123 applies the output of the LPF 17 or its input to the circuit (DIGVIP 5 in Fig. 4, ADC 3 in Fig. 5) which follows the LPF 17. The digital filter (Fig. 4) has preferably a [1 2 2 1] or [2 3 4 4 3 2] impulse response at 13.5 MHz sample frequency because of a number of reasons:

An amplitude response which is a close copy of the frequency domain representation of the elementary pulse which is used at the WSS-encoder. This use is understood to mean that in the encoder, the Wide Screen Signalling bit stream is low-pass filtered by means of a low-pass filter having an amplitude response corresponding to the frequency domain representation of the elementary pulse. The used elementary pulse EP can be described by the formula EP = cos² (π/2 * t/(200 ns) ) when -200 ns ≤ t ≤ +200 ns, and EP = 0 elsewhere.

A spectral null at or in the direct neighborhood of the color subcarrier. Explanation: some VCR's average color information over two lines so that color subcarrier might leak into line 23. Suppression of color subcarrier by a WSS-decoder input filter is therefore wanted if VCR signals are going to be its input.

A [1 2 2 1] digital filter meets these demands quite closely. Such a filter gives a noise power suppression of more than 4 dB unweighed in the PAL vision bandwidth of 5 MHz. The [2 3 4 4 3 2] filter is more complex, has a steeper roll-off and is useful as a compromise if the WSS data bits are hard decoded instead of soft decoded. For an explanation as to the notions soft and hard decoding, reference is made to J.G. Proakis, Digital communications, second edition, McGraw-Hill Book Co, 1989. Both digital filters have a spectral null at 4.5 MHz which is sufficiently close enough to the color subcarrier frequency f_{sc} = 4.43361875 MHz.

If an implementation is chosen which includes an analog low-pass WSS-decoder input filter 17 (see Fig. 5), then its response should either be that of the elementary pulse of the WSS-encoder combined, if necessary, with a notch at the color subcarrier frequency, or look like the amplitude response of a [2 3 4 4 3 2] digital filter with a sample frequency of 13.5 MHz. An advantage of an analog filter might be that it can be put outside the teletext and WSS bits decoder IC.

### The start-code detection process.

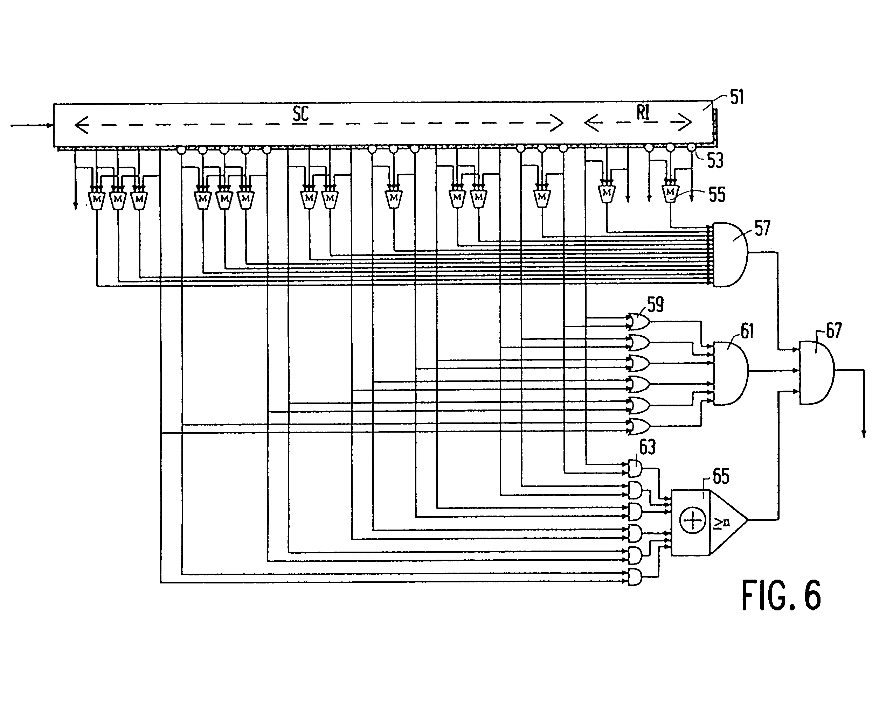

The process of start-code detection is presented in successive order by the following items:
. The vertical and horizontal sync in CVBS control the process of finding line 23. This part is taken care of by the field timing circuit 9.
. Line 23 has been found. From the horizontal sync, the line timing circuit 7 generates a time window which enables the search for the start code of wide screen signalling. This window has a timing tolerance of at least ± 4 µs. Hence, this window has at least a duration of 14 µs, as the combination of the start code and the run-in tail lasts 6 µs.
. During the time that the start code window is active, the start code is searched in real time. In one embodiment, a start code is said to be detected whenever the following two criteria are both met (see Fig. 6):
   . All 14 a priori selected bits from the start code and run-in tail must be correct.
   . From 5 a priori selected start code bit pairs and I bit pair at the transition of start code and run-in, minimal n pairs must be free from error. Those bit pairs that are not correct should not have both bits inverted. This number n is a predetermined value; n ∈ {0, 1,..., 6}. Good choices appeared to be n=4 or n=5.
. As soon as the criteria for start-code detection are met, the process of start code search is halted. Now, the timing of the wide screen signalling information has been estimated.

Fig. 6 shows a block diagram of a start code detector. The received data is shifted into a shift register 51. As both the tail of the run-in RI and the start code SC are known, it is possible to provide all shift register outputs which are supposed to supply zero bits in case of a correct reception with inverters (indicated by small circles 53). Taking these inverters 53 into account, all output signals should be logical "1". Preferably, like outputs are filtered by 14 small filters 55 which furnish the left-hand input signal if the left-hand and right-hand input signals are equal, and which furnish the middle input signal otherwise. The outputs of the 14 filters 55 are applied to a logical AND circuit 57 which supplies a logical "1" in case of a correct reception of the start code SC and the run-in tail RI. The 14 filters 55 could be omitted after appropriate low-pass pre-filtering, in which case the middle input bit of each filter would be applied to the logical AND circuit 57. These middle bits are believed to show a good detection reliability even under bad reception conditions (for example, after recording on a VCR which, inter alia, results in a low-pass "filtering" of the signal) because their respective left and right adjacent bits should have the same value upon correct reception.

The start code detector of Fig. 6 further checks the zero-one and one-zero transition bit pairs in the start code SC by applying the transition bit pairs to logical OR circuits 59 whose outputs are applied to inputs of a logical AND circuit 61. Again, in case of a correct reception of the start code, the logical AND circuit 61 supplies a logical "1".

To increase the detection quality even further, the same six start code transition bit pairs are applied to logical AND circuits 63, whose outputs are applied to a logical circuit 65 which furnishes a logical "1" if at least n of the output signals of the logical AND circuits 63 are logical "1". If in at least one of the transition bit pairs, both bits are inverted, the corresponding OR circuit will furnish a logical "0" to the AND circuit 61 which will thus also furnish a logical "0" output signal.

Finally, a logical AND circuit 67 receives the outputs of the logical circuits 57, 61 and 65 and furnishes a "start code detected" signal if all outputs are logical "1".

If no start code is detected, no line 23 detection signal is generated and further WSS processing in the present frame is halted. In the other case, a line 23 detection signal is generated and the WSS data can be estimated.

### Data and data reliability estimation

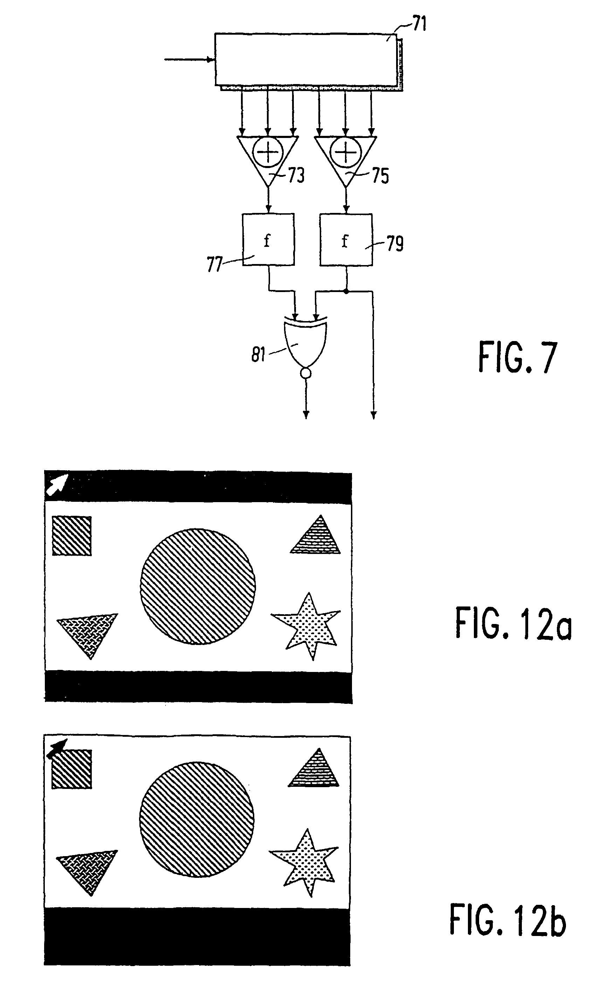

Let's assume that the start-code has been detected. Now we have an estimate of the timing of the start code, we also have an estimate of the location of the data. The 14 data bits can now be estimated. Each data bit includes 6 hard sliced samples. Therefore no soft decision decoding is possible (see the above-mentioned book of Proakis). The first 3 samples should be the inverse of the second 3 samples. The estimation process of the data is presented in Fig. 7 and is the following. Take the first 3 samples of the 6 samples present in a shift register 71. A counter 75 counts the number of ones. If the number of ones is equal or greater than 2, a decision circuit 79 decides that the data bit b is "1"; in the other case, the decision circuit 79 decides that a "0" has been received. Repeat the same procedure for the second 3 samples by means of a counter 73 and a decision circuit 77. The results of the decision circuits 77, 79 are compared by a logical NOT-EX-OR circuit 81. If the results are each other's inverse then the data estimate b is reliable else not. The data reliability is signalled by violation flags v; each data bit b has its own reliability flag v. This process is executed 14 times.

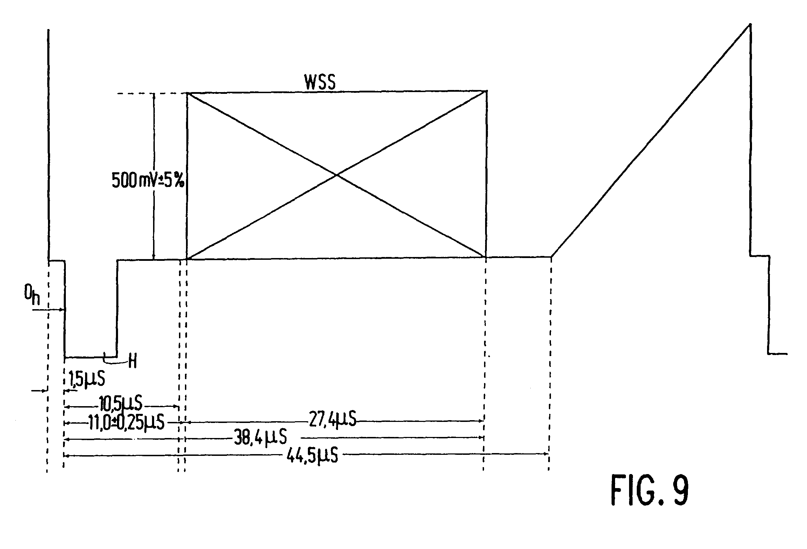

An alternative data bit estimator is shown in Fig. 8. The first and second output samples of the shift register 71 are applied to a logical AND circuit 83, the second and third output samples to an AND 85, and the first and third output samples to an AND 87. The fourth and fifth output samples of the shift register 71 are applied to a logical AND circuit 89, the fifth and sixth output samples to an AND 91, and the fourth and sixth output samples to an AND 93. The outputs of the ANDs 83-87 are applied to a logical OR circuit 95, and the outputs of the ANDs 89-93 are applied to a logical OR circuit 97. The OR 97 furnishes the data bit b. The outputs of the ORs 95 and 97 are applied to the logical NOT-EX-OR circuit 81 to obtain the corresponding violation flag v.

### Data transfer

The 14 data bits and their corresponding violation flags are put into a buffer. The outer world can access this data in the buffer via IIC communication. Further processing has already been mentioned above.

### Proposal for Wide Screen Signalling bits.

For a smooth introduction of new television services with a 16:9 display aspect ratio in PAL and SECAM standards, it is necessary to signal the aspect ratio used together with some switching information to the television receiver. The receiver should be capable of reacting automatically to this information by displaying the video information in a specified aspect ratio. This signalling is to be considered separately from the type of system used, but it should allow transmission of system related switching information as well.

The proposed standard leaves room for the later allocation of additional switching information, related to the introduction of enhanced television services. The proposed standard is applicable for 625 line PAL and SECAM television systems, but there is potential to adopt it to other standards as well.

This proposal is applicable to 625 line PAL and SECAM systems in use, in case where wide-screen signalling is required by the broadcasters. It specifies the wide screen signalling information, the coding and the way of incorporating the coded information into a 625 line system. The wide screen signalling information contains information on the aspect ratio range of the transmitted signal and its position, on the position of the subtitles and on the camera/film mode. Furthermore some bits are reserved for future EDTV signalling (e.g. PALplus) as well as for future use.

This proposal specifies the transmitted signal. An annex gives the rules of operation for the minimum requirements tor receiver display formats as well as for subtitling.

For the purpose of this standard the following definition shall apply: Letterbox operation is the use of a picture format with an aspect ratio greater than 1.33, in such a way that empty (black) lines are added to conform to a 4:3 transmission format.

### Symbols and abbreviations

- TXT:: Teletext
- Fs:: clock frequency
- Ts:: sampling period
- Td:: data bit period
- a:: Aspect ratio

This paragraph specifies the line code of the wide-screen signalling. The signalling bits are transmitted as a data burst in the first part of line 23. The position of the beginning of the wide screen signalling bits WSS is 11.0 ± 0.25 µs from Oh of the horizontal sync pulse H, as indicated in Fig. 9. In each frame line 23 shall be occupied with the wide screen signalling.
The clock frequency is: Fs = 5 MHz (+/- 1*10⁻⁴)
The sample period is: Ts = 200 ns
The signal shape is approximately a sine squared pulse.
The half amplitude pulse duration is: 200 ns +/- 10 ns.
The signal amplitude with respect to a maximum video signal amplitude of 700 mV is: 500 mV +/- 5%

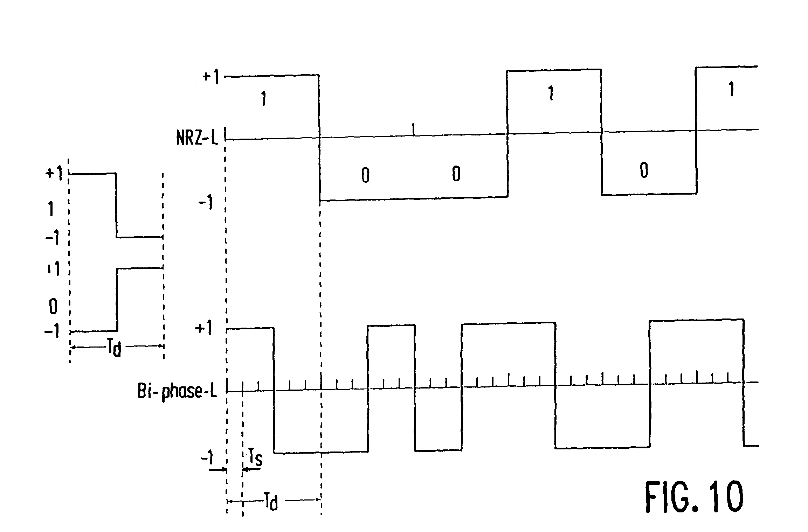

The type of modulation coding is bi-phase modulation coding according to Fig. 10. The duration of one data bit equals Td. The data bits are inserted in NRZ-L, in which one data bit period equals 2 times 3 clock periods: Td = 6 Ts.

The preamble contains a run-in and a start code. The preamble is given in the wide screen signalling bits transmission scheme table shown in Fig. 11. There are 14 bits in total. One out of these 14 bits is allocated to the error detection code. There are 13 data-bits available for transmission of information. The data bits are grouped in 4 data groups, see the table shown in Fig. 11. For error detection, an odd parity bit has been introduced. The odd parity bit belongs to the first 3 data bits only.

The 13 data carrying bits are grouped in 4 groups. Group 1 contains 4 bits in which the first 3 bits carry data and the last bit denotes the odd parity bit over the first three data bits. Group 2 contains 4 data bits, group 3 contains 3 data bits and group 4 contains 3 data bits.

The data bits are labelled b₀ up to and including b₂, and b₄ up to and including b₁₃. Bit b₃ is the odd parity bit as is shown in Fig. 11 and Table 1. The index also indicates the order of transmission: i.e. b₀ is the first transmitted bit.

### Data Group 1, Aspect Ratio

Bits b₀, b₁, b₂ denote the aspect ratio label, the letterbox format and position according to Table 1. Bit b₃ denotes odd parity of bits b₀, b₁, b₂, b₃ according to Table 1.

**Table 1:**

| Aspect ratio label, letterbox and position code | | | | | |
|---|---|---|---|---|---|
| b₃ | b₂b₁b₀ | Aspect ratio label | Full format or Letterbox | Position | No. of active lines(1) |
| 1 | 000 | 4:3 | full format | not applicable | 576 |
| 0 | 001 | 14:9 | letterbox | center | 504 |
| 0 | 010 | 14:9 | letterbox | top | 504 |
| 1 | 011 | 16:9 | letterbox | center | 430 |
| 0 | 100 | 16:9 | letterbox | top | 430 |
| 1 | 101 | > 16:9 | letterbox | center | not defined |
| 1 | 110 | 14:9 | full format (2) | center | 576 |
| 0 | 111 | 16:9 | full format (anamorphic) | not applicable | 576 |

| | | | | | |
|---|---|---|---|---|---|
| Note (1): The number of active lines is only an indication for the exact aspect ratio a=1.33, a=1.57 and a=1.78. | | | | | |
| Note (2): The actual transmitted aspect ratio is 4:3, but a 14:9 window should contain all the relevant picture content to encourage a wide screen display on a 16:9 television set. | | | | | |

The aspect ratio label indicates a range of possible aspect ratio. All aspect ratio's falling in these ranges are labelled by the same code. Table 2 indicates the aspect ratio ranges.

**Table 2:**

| Aspect ratio ranges | |
|---|---|
| Aspect ratio label | Aspect ratio range |
| 4:3 | a ≤ 1.46 |
| 14:9 | 1.46 < a ≤ 1.66 |
| 16:9 | 1.66 < a ≤ 1.90 |
| > 16:9 | a > 1.90 |

### Data Group 2, Enhanced Services

Bit b₄ denotes the film bit in accordance with table 3.

**Table 3:**

| Film bit | |
|---|---|
| b₄ | Film bit |
| 0 | camera mode |
| 1 | film mode (3) |

| | |
|---|---|
| Note (3): The field dominance conforms to the EBU Recommendation R62-1990, entitled: "Recommendation dominant field for 625-line 50 Hz processing". | |

Bits b₅, b₆ and b₇ are reserved. Should all be set to '0'.

### Data Group 3, Subtitles within Teletext bit.

Bit b₈ denotes the subtitles within Teletext bit in accordance with table 4.

**Table 4:**

| Subtitles within Teletext bit | |
|---|---|
| b₈ | Subtitles within Teletext bit |
| 0 | no subtitles within Teletext |
| 1 | subtitles within Teletext |

### Subtitling mode

Bits b₉, b₁₀ denote the subtitling mode in accordance with table 5.

**Table 5:**

| Subtitling mode | |
|---|---|
| b₁₀, b₉ | Subtitles in/out of active image area |
| 00 | no open subtitles |
| 01 | subtitles in active image area |
| 10 | subtitles out of active image area |
| 11 | reserved |
| Note: the 'out of active image area' subtitling, which extends into the active image area, shall be treated as 'out of active image area'. | |

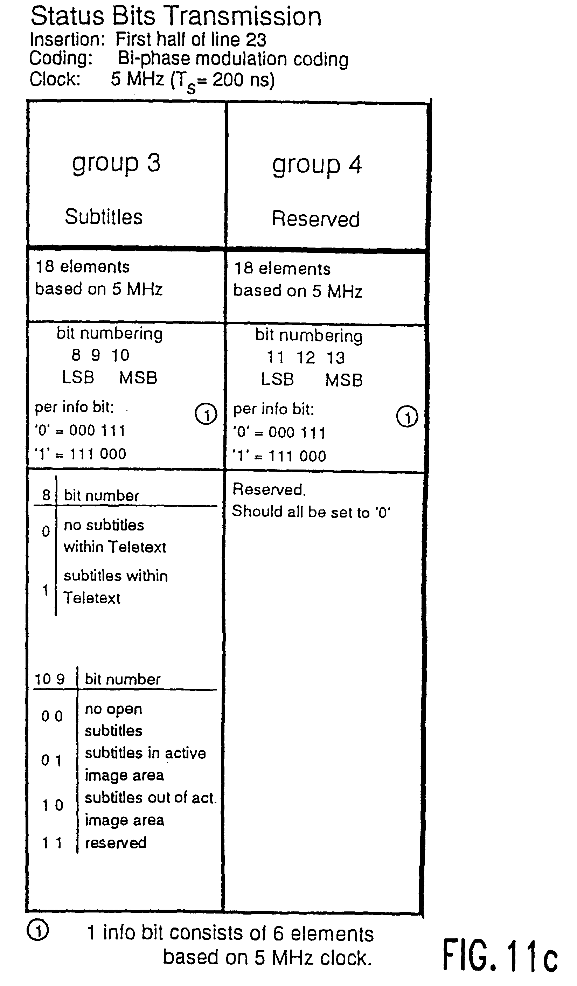

Fig. 12 indicates the meaning of the terms 'in active image area' and 'out of active image area'. If the subtitle is within the white center part of the letterbox picture, the subtitle is within the active image area. If the subtitles are in the black bars of the letterbox picture, the subtitle is out of the active image area. In Fig. 12, diagram a illustrates the letterbox center mode, while diagram b illustrates the letterbox top mode. Logos may be positioned in the upper left corner as indicated by the arrows.

### Data Group 4, reserved

Bits b₁₁, b₁₂, b₁₃ are reserved. Should all be set to '0'.

### ANNEX A - Rules of operation (informative)

### A1 - Receiver Display Formats

To ensure automatic selection of the most appropriate display mode, the receiver with a 16:9 display should comply with the following minimum requirements:

**Table A1:**

| Aspect ratio minimum requirements | | |
|---|---|---|
| b₂b₁b₀ | Aspect ratio label | Minimum Requirements |
| 000 | 4:3 | case I |
| 001 | 14:9 | case 2 |
| 010 | 14:9 | case 2 |
| 011 | 16:9 | case 3 |
| 100 | 16:9 | case 3 |
| 101 | > 16:9 | case 4 |
| Case 1: 4:3 full format: The 4:3 aspect ratio picture should be displayed centred with black bars at the left and right hand side of the display. | | |
| Case 2: Letterbox signalled as 14:9: the 14:9 aspect ratio picture should be displayed using one of the following two methods: a) the 14:9 aspect ratio picture shall be displayed centred with small bars at the left and right hand sides of the display; b) the 14:9 picture may be displayed filling the full width of the visible screen by incorporating a small horizontal geometrical error - typically 8%. | | |
| Case 3: Letterbox signalled as 16:9: the 16:9 aspect ratio picture should be displayed using the full width of the screen. | | |
| Case 4: Letterbox signalled as > 16:9: the > 16:9 aspect ratio picture should be displayed using one of the following two methods: a) as under Case 3; b) the > 16:9 picture may be displayed using the full height of the screen, by further zooming in. | | |

It should be noted that the viewer should be free to override the automatically selected display condition. The speed of the automatic change of aspect ratio is limited mainly by the response time of the deflection circuit.

### A2 - Subtitling

When the subtitling of letterboxed pictures is in the 'out-of active image area', even when partly, the new 16:9 receivers will loose this information, unless they display the picture in the 4:3 mode. This would mean that on the 16:9 receiver black bars would be present all around the active image content and this is to be avoided.

To serve both the interests of the existing 4:3 and the new 16:9 viewers, it is of great importance, that
- wide screen programmes should always have the subtitling (whether 'in active image area' or 'out of active image area') conveyed as well by means of the Teletext service, and that
- new 16:9 receivers, complying with this standard, should be equipped with a Teletext decoder and always have the possibility of detecting the Teletext presence bit b₈.

### A3 - Procedure in absence of signalling

In the absence of signalling bits, the receiver should go to a default mode.

### ANNEX B - Recommendations

### B1 - Low-pass pre-filtering

It is recommended that the received wide screen signalling bits are low-pass filtered before decoding. This low-pass filter should preserve the main spectral energy of the wide screen signalling bits signal, which resided in the spectral domain of 0 MHz up to 1.67 MHz.

### B2 - Response time on a change in the received signalling information.

The maximum response time on a change in the received signalling bits information is recommended to be 120 ms.

It should be noted that the above-mentioned embodiments illustrate rather than limit the invention, and that those skilled in the art will be able to design many alternative embodiments without departing from the scope of the appended claims.

## Claims

1. An extended television signal comprising signalling bits for conveying control information to control an extended decoder, the signalling bits comprising a start code and data bits, wherein the start code's main lobe of spectral energy resides in the lower spectral area of a baseband television signal, said lower spectral area having a maximum frequency below 2 MHz, the start code having an amplitude dip at zero frequency, and the start code has good aperiodic correlation properties in that an autocorrelation of the start code, normalized to a global maximum of one at zero delay, shows a difference of at least one half between the global maximum and any local maxima, and a predetermined minimum bit Hamming distance to the data bits when shifted in the direction of the data bits following the start code, the predetermined minimum bit Hamming distance being at least one.

2. An extended television signal as claimed in claim 1, wherein the start code has an amplitude dip at said maximum frequency.

3. An extended television signal as claimed in claim 1, wherein the signalling bits further comprise a run-in preceding the start code, and the start code has a predetermined minimum bit Hamming distance to the run-in when shifted in the direction of the run-in.

4. An extended television signal as claimed in claim 1, wherein the signalling bits further comprise a run-in preceding the start code, the start code is based on a bit sequence of a first length and has a first minimum bit Hamming distance to said run-in, and wherein the combination of a last part of the run-in together with the start code is based on a bit sequence of a second length exceeding said first length, said combination has a second minimum bit Hamming distance to said run-in, and said second minimum bit Hamming distance exceeds said first minimum bit Hamming distance.

5. An extended television signal as claimed in claim 4, wherein the start code has a third minimum bit Hamming distance to said data bits, said combination has a fourth minimum bit Hamming distance to said data bits, and said fourth minimum bit Hamming distance exceeds said third minimum bit Hamming distance.

6. An extended television signal as claimed in claim 1, wherein the start code is based on a Barker sequence of a first length, and the signalling bits further comprising a run-in preceding the start code, the combination of a last part of the run-in together with the start code being based on a Barker sequence of a second length exceeding said first length.

7. An extended television signal as claimed in claim 1, wherein the start code includes a sequence being code modulated in a manner deviating from the code modulation of the data bits.

8. An extended television signal as claimed in claim 7, wherein said sequence is 1E 3C1F in hexadecimal notation.

9. An extended television signal as claimed in claim 8, the signalling bits further comprising a run-in whose last bits are 000111 in binary notation.

10. An extended television signal as claimed in claim 1, the signalling bits further comprising a run-in having at least eight transients.

11. An extended television signal as claimed in claim 1, wherein said maximum frequency of said lower spectral area is below 1.7 MHz.

12. An extended television signal as claimed in claim 1, wherein said minimum bit Hamming distance of the start code to the data bits is three.

13. An extended television signal decoder, comprising:
means (1) coupled to receive an extended television signal (CVBS) comprising image data, signalling bits for conveying control information to control processing operations with regard to said image data, and synchronizing information (VCS), for deriving said synchronizing information (VCS) from said extended television signal (CVBS);
means (7) coupled to receive said synchronizing information (VCS) for selecting a signalling bits window;
means (5, 11, 13) coupled to receive said extended television signal for decoding said signalling bits during said signalling bits window;
wherein the signalling bits comprising a start code and data bits, the start code's main lobe of spectral energy resides in the lower spectral area of a baseband television signal, said lower spectral area having a maximum frequency below 2 MHz, the start code having a local spectral minimum at DC, and the start code has good aperiodic correlation properties in that an autocorrelation of the start code, normalized to a global maximum of one at zero delay, shows a difference of at least one half between the global maximum and any local maxima, and a predetermined minimum bit Hamming distance to the data bits when shifted towards or over the data bits following the start code, the predetermined minimum bit Hamming distance being at least one.

14. An extended television decoder as claimed in claim 13, wherein said signalling bits decoding means (5, 11, 13) are preceded by a low-pass filter having a cut-off frequency at said maximum frequency.

15. An extended television decoder as claimed in claim 13, wherein said signalling bits decoding means (5, 11, 13) are preceded by a low-pass filter having a spectral minimum at the color subcarrier frequency and an impulse response approximating a frequency domain representation of an elementary pulse EP = cos² (π/2 * t/(200 ns) ) when -200 ns ≤ t ≤ +200 ns, and EP = 0 elsewhere.

16. An extended television decoder as claimed in claim 13, wherein said signalling bits decoding means (5, 11, 13) are preceded by a low-pass filter having a [1 2 2 1] or [2 3 4 4 3 2] impulse response at a 13.5 MHz sample rate.

17. An extended television decoder as claimed in claim 13, wherein said signalling bits decoding means (5, 11, 13) comprise a start code detector (11) operative during a start code timing window having a timing tolerance of at least ± 4 µs.

18. An extended television decoder as claimed in claim 13, wherein said signalling bits further comprise a run-in preceding said start code and said signalling bits decoding means (5, 11, 13) comprise a start code detector (11) arranged for detecting a combination of said start code and a last part of said run-in.

19. An extended television decoder as claimed in claim 13, wherein said signalling bits decoding means (5, 11, 13) comprise a start code detector (11) arranged for detecting a start code sequence which is 1E 3C1F in hexadecimal notation.

20. An extended television decoder as claimed in claim 13, wherein said signalling bits decoding means (5, 11, 13) comprises:
means (57) for determining whether a first plurality of bits has been correctly received;
means (63, 65) for determining whether amongst a second plurality of bits, at least a predetermined number is free from error.

21. An extended television decoder as claimed in claim 13, wherein said start code detector (11) further comprises:
means (59, 61) for determining whether said second plurality of bits contains a bit pair around a transient, of which bit pair both bits are inverted.

22. A method of decoding an extended television signal, comprising the steps of:
receiving (1) an extended television signal (CVBS) comprising image data, signalling bits for conveying control information to control processing operations with regard to said image data, and synchronizing information (VCS), for deriving said synchronizing information (VCS) from said extended television signal (CVBS);
selecting (7) a signalling bits window in dependence on said synchronizing information (VCS);
decoding (5, 11, 13) said signalling bits during said signalling bits window in response to said extended television signal (CVBS);
wherein the signalling bits comprising a start code and data bits, the start code's main lobe of spectral energy resides in the lower spectral area of a baseband television signal, said lower spectral area having a maximum frequency below 2 MHz and which maximum frequency is preferably below 1.7 MHz, the start code having a local spectral minimum at DC, and the start code has good aperiodic correlation properties in that an autocorrelation of the start code, normalized to a global maximum of one at zero delay, shows a difference of at least one half between the global maximum and any local maxima, and a predetermined minimum bit Hamming distance to the data bits when shifted towards or over the data bits following the start code, the predetermined minimum bit Hamming distance being at least one.

## Patentansprüche

1. Erweitertes Fernsehsignal mit Signalisierungsbits zum Transportieren von Steuerinformation zur Steuerung eines erweiterten Decoders, wobei die Signalisierungsbits einen Startcode und Datenbits enthalten, wobei die Hauptkeule der Spektralenergie des Startcodes in dem unteren Spektralbereich eines Basisbandfernsehsignals liegt, wobei der genannte untere Spektralbereich eine maximale Frequenz unterhalb 2 MHz hat, wobei der Startcode eine Amplitudensenke bei Frequenz Null hat, undb dass der Startcode gute aperiodische Korrelationseigenschaften hat, dass eine Autokorrelation des Startcodes, genormt zu einem globalen Maximum gleich eins bei einer Null Verzögerung, zeigt eine Differenz von wenigstens einem Halbwert zwischen dem globalen Maximum und jedem lokalen Maximum, und einen vorbestimmten minimalen Hammingabstand von den Datenbits, wenn in Richtung der Datenbits verschoben, die dem Startcode folgen, wobei der vorbestimmte minimale Hammingabstand wenigstens Eins ist.

2. Erweitertes Fernsehsignal nach Anspruch 1, wobei der Startcode eine Amplitudensenke bei der genannten maximalen Frequenz hat.

3. Erweitertes Fernsehsignal nach Anspruch 1, wobei die Signalisierungsbits weiterhin einen Einlauf haben, der dem Startcode vorhergeht, und der Startcode hat einen vorbestimmten minimalen Bit-Hammingabstand von dem Einlauf, wenn in Richtung des Einlauf verschoben.

4. Erweitertes Fernsehsignal nach Anspruch 1, wobei die Signalisierungsbits weiterhin einen Einlauf haben, der dem Startcode vorhergeht, wobei der Startcode auf einer Bitfolge einer ersten Länge basiert und einen ersten minimalen Bit-Hammingabstand von dem Einlauf hat, und wobei die Kombination eines letzten Teils des Einlaufs zusammen mit dem Startcode auf einer Bitfolge einer zweiten Länge basiert, die größer ist als die genannte erste Länge, wobei die genannte Kombination einen zweiten minimalen Bit-Hammingabstand von dem Einlauf hat und dass der genannte zweite minimale Bit-Hammingabstand größer ist als der erste minimale Bit-Hammingabstand.

5. Erweitertes Femsehsignal nach Anspruch 4, wobei der Startcode einen dritten minimalen Bit-Hammingabstand von den Datenbits hat, wobei die genannte Kombination einen vierten minimalen Bit-Hammingabstand von den genannten Datenbits hat, und der genannte vierte minimale Bit-Hammingabstand größer ist als der genannte dritte minimale Bit-Hammingabstand.

6. Erweitertes Fernsehsignal nach Anspruch 1, wobei der Startcode auf einer Barkerfolge einer ersten Länge basiert ist, und die Signalisierungsbits weiterhin einen vor dem Startcode liegenden Einlauf haben, wobei die Kombination des Einlaufs zusammen mit dem Startcode auf einer Barkerfolge einer die erste Länge übersteigenden zweiten Länge basiert ist.

7. Erweitertes Fernsehsignal nach Anspruch 1, wobei der Startcode eine Folge aufweist, die auf eine Art und Weise codemoduliert ist, die von der Codemodulation der Datenbits abweicht.

8. Erweitertes Fernsehsignal nach Anspruch 7, wobei die genannte Folge 1E 3CIF in hexadezimaler Notierung ist.

9. Erweitertes Fernsehsignal nach Anspruch 8, wobei die Signalisierungsbits weiterhin einen Einlauf aufweisen, dessen letzte Bits 000111 in binärer Notierung sind.

10. Erweitertes Fernsehsignal nach Anspruch 1, wobei die Signalisierungsbits weiterhin einen Einlauf mit wenigstens acht Übergängen aufweisen.

11. Erweitertes Fernsehsignal nach Anspruch 1, wobei die genannte maximale Frequenz des genannten unteren Spektralbereichs unterhalb 1,7 MHz liegt.

12. Erweitertes Fernsehsignal nach Anspruch 1, wobei der genannte minimale Bit-Hammingabstand des Startcodes von den Datenbits drei beträgt.

13. Decoder für ein erweitertes Fernsehsignal, mit:
Mitteln (1), die ein erweitertes Fernsehsignal (CVBS) empfangen, wobei dieses Signal Bilddaten, Signalisierungsbits zum Transportieren von Steuerinformation zur Steuerung von Verarbeitungsvorgängen in Bezug auf die genannten Bilddaten, und Synchrinisationsinformation (VCS) aufweist, zum Herleiten der genannten Synchronisationsinformation (VCS) aus dem genannten erweiterten Fernsehsignal (CVBS);
Mitteln (7) zum Empfangen der genannten Synchronisationsinformation (VCS) zum Selektieren eines Signalisierungsbitsfensters;
Mitteln (5, 11, 13) zum Empfangen des genannten erweiterten Fernsehsignals zum Decodieren der genannten Signalisierungsbits während des genannten Signalisierungsbitsfensters;
wobei die Signalisierungsbits einen Startcode und Datenbits enthalten, wobei die Hauptkeule der Spektralenergie des Startcodes in dem unteren Spektralbereich eines Basisbandfernsehsignals liegt, wobei der genannte untere Spektralbereich eine maximale Frequenz unterhalb 2 MHz hat, wobei der Startcode eine Amplitudensenke bei Frequenz Null hat, und der Startcode gute aperiodische Korrelationseigenschaften hat, dass eine Autokorrelation des Startcodes, genormt zu einem globalen Maximum gleich Eins bei einer Null Verzögerung, eine Differenz von wenigstens einem Halbwert zwischen dem globalen Maximum und jedem lokalen Maximum zeigt, und einen vorbestimmten minimalen Bit-Hammingabstand von den Datenbits, wenn in Richtung derjenigen Datenbits verschoben, die dem Startcode folgen, wobei der vorbestimmte minimale Bit-Hammingabstand wenigstens Eins ist.

14. Erweiterter Fernsehdecoder nach Anspruch 13, wobei den genannten Signalisierungsbitsdecodierungsmitteln (5, 11, 13) ein Tiefpassfilter mit einer Grenzfrequenz bei der genannten maximalen Frequenz vorgeschaltet ist.

15. Erweiterter Fernsehdecoder nach Anspruch 13, wobei den genannten Signalisierungsbitsdecodierungsmitteln (5, 11, 13) ein Tiefpassfilter vorgeschaltet ist und zwar ein Tiefpassfilter mit einem spektralen Minimum bei der Farbhilfsträgerfrequenz und mit einer Impulsstoßantwort in der Nähe eines Frequenzbereichs, das einen Elementarimpuls EP = cos² (π/2 * t/(200 ns)) wenn -200 ns ≤ t ≤ +200 ns, und anderswo EP = 0 ist, darstellt.

16. Erweiterter Fernsehdecoder nach Anspruch 13, wobei den genannten Signalisierungsbitsdecodierungsmitteln (5, 11, 13) ein Tiefpassfilter vorgeschaltet ist mit einer [1 2 2 1] oder [2 3 4 4 3 2] Impulsstoßantwort bei einer Abtastrate von 13,5 MHz.

17. Erweiterter Fernsehdecoder nach Anspruch 13, wobei die genannten Signalisierungsbitsdecodierungsmittel (5, 11, 13) einen Startcodedetektor (11) aufweisen, der während eines Startcodezeitsteuerfensters mit einer Zeitsteuertoleranz von wenigstens ± 4 µs wirksam ist.

18. Erweiterter Fernsehdecoder nach Anspruch 13, wobei die genannten Signalisierungsbits weiterhin einen dem Startcode vorhergehenden Einlauf haben und die genannten Signalisierungsbitsdecodierungsmittel (5, 11, 13) einen Startcodedetektor (11) aufweisen zum Detektieren einer Kombination des genannten Startcodes und eines letzten Teils des genannten Einlaufs.

19. Erweiterter Fernsehdecoder nach Anspruch 13, wobei die genannten Signalisierungsbitsdecodierungsmittel (5, 11, 13) einen Startcodedetektor (11) aufweisen zum Detektieren einer Startcodefolge, die 1E 3CIF in hexadezimaler Form ist.

20. Erweiterter Fernsehdecoder nach Anspruch 13, wobei die genannten Signalisierungsbitsdecodierungsmittel (5, 11, 13) die nachfolgenden Mittel aufweisen:
Mittel (57) um zu bestimmen, ob eine erste Anzahl Bits einwandfrei empfangen worden ist;
Mittel (63, 65) um zu bestimmen, ob unter einer zweiten Anzahl Bits wenigstens eine vorbestimmte Anzahl fehlerfrei ist.

21. Erweiterter Fernsehdecoder nach Anspruch 13, wobei der genannte Startcodedetektor (11) weiterhin die nachfolgenden Elemente umfasst:
Mittel (59, 61) um zu bestimmen, ob die genannte zweite Anzahl Bits ein Bitpaar um einen Übergang herum aufweist, wobei von diesem Bitpaar beide Bits invertiert sind.

22. Verfahren zum Decodieren eines erweiterten Fernsehsignals mit den nachfolgenden Verfahrensschritten:
das Empfangen (1) eines erweiterten Fernsehsignals (CVBS) mit Bilddaten, mit Signalisierungsbits zum Transportieren von Steuerinformation zur Steuerung von Verarbeitungsvorgängen in Bezug auf die genannten Bilddaten, und mit Synchronisierungsinformation (VCS) zum herleiten der genannten Synchronisierungsinformation (VCS) aus dem genannten erweiterten Fernsehsignal (CVBS);
das Selektieren (7) eines Signalisierungsbitsfensters je nach der genannten Synchronisierungsinformation (VCS);
das Decodieren (5, 11, 13) der genannten Signalisierungsbits während des genannten Signalisierungsbitsfensters in Reaktion auf das genannte erweiterte Fernsehsignal (CVBS);
wobei die Signalisierungsbits einen Startcode und Datenbits aufweisen, wobei die Haupt keule der Spektralenergie des Startcodes in dem unteren Spektralbereich eines Basisbandfernsehsignals liegt, wobei der genannte untere Spektralbereich eine maximale Frequenz unterhalb 2 MHz hat,und wobei diese maximale Frequenz vorzugswei-Source-Elektrode unterhalb 1,7 MHz liegt, wobei der Startcode ein lokales spektrales Minimum bei DC hat, und dass der Startcode gute aperiodische Korrelationseigenschaften hat, dass eine Autokorrelation des Startcodes, genormt zu einem globalen Maximum gleich Eins bei einer Null Verzögerung, eine Differenz von wenigstens einem Halbwert zwischen dem globalen Maximum und jedem lokalen Maximum zeigt, und einen vorbestimmten minimalen Bit-Hammingabstand von den Datenbits, wenn in Richtung derjenigen Datenbits verschoben, die dem Startcode folgen, wobei der vorbestimmte minimale Bit-Hammingabstand wenigstens Eins ist.

## Revendications

1. Signal de télévision étendu comprenant des bits de signalisation pour acheminer des informations de commande pour commander un décodeur étendu, les bits de signalisation comprenant un code de départ et des bits de données, dans lequel le lobe principal de l'énergie spectrale du code de départ réside dans la zone spectrale inférieure d'un signal de télévision de bande de base, ladite zone spectrale inférieure présentant une fréquence maximale inférieure à 2 MHz, le code de départ présentant une pente d'amplitude à fréquence zéro, et le code de départ présente de bonnes propriétés de corrélation apériodiques du fait qu'une autocorrélation du code de départ, normalisé sur un maximum global de un pour un retard zéro, présente une différence d'au moins la moitié entre le maximum global et tout maximum local, et une distance de Hamming binaire minimale prédéterminée par rapport aux bits de données lorsqu'il est décalé dans la direction des bits de données suivant le code de départ, la distance de Hamming binaire minimale prédéterminée étant au moins de un.

2. Signal de télévision étendu suivant la revendication 1, dans lequel le code de départ présente une pente d'amplitude à ladite fréquence maximale.

3. Signal de télévision étendu suivant la revendication 1, dans lequel les bits de signalisation comprennent en outre une partie initiale précédant le code de départ, et le code de départ comporte une distance de Hamming binaire minimale prédéterminée par rapport à la partie initiale lorsqu'il est décalé dans la direction de la partie initiale.

4. Signal de télévision étendu suivant la revendication 1, dans lequel les bits de signalisation comprennent en outre une partie initiale précédant le code de départ, le code de départ est basé sur une séquence binaire d'une première longueur et comporte une première distance de Hamming binaire minimale par rapport à la partie initiale, et dans lequel la combinaison d'une dernière partie de la partie initiale ainsi que du code de départ est basée sur une séquence binaire d'une deuxième longueur dépassant ladite première longueur, ladite combinaison comporte une deuxième distance de Hamming binaire minimale par rapport à ladite partie initiale, et ladite deuxième distance de Hamming binaire minimale dépasse ladite première distance de Hamming binaire minimale.

5. Signal de télévision étendu suivant la revendication 4, dans lequel le code de départ comporte une troisième distance de Hamming binaire minimale par rapport auxdits bits de données, ladite combinaison comporte une quatrième distance de Hamming binaire minimale par rapport aux bits de données, et ladite cinquième distance de Hamming binaire minimale dépasse ladite troisième distance de Hamming binaire minimale.

6. Signal de télévision étendu suivant la revendication 1, dans lequel le code de départ repose sur une séquence de Barker d'une première longueur, les bits de signalisation comprenant en outre une partie initiale précédant le code de départ, la combinaison d'une dernière partie de la partie initiale ainsi que du code de départ reposant sur une séquence de Barker d'une deuxième longueur dépassant ladite première longueur.

7. Signal de télévision étendu suivant la revendication 1, dans lequel le code de départ comprend une séquence qui est modulée par code d'une manière s'écartant de la modulation par code des bits de données.

8. Signal de télévision étendu suivant la revendication 7, dans lequel ladite séquence est 1E 3C1F en notation hexadécimale.

9. Signal de télévision étendu suivant la revendication 8, les bits de signalisation comprenant en outre une partie initiale dont les derniers bits sont 000111 en notation binaire.

10. Signal de télévision étendu suivant la revendication 1, les bits de signalisation comprenant en outre une partie initiale comportant au moins huit transitoires.

11. Signal de télévision étendu suivant la revendication 1, dans lequel ladite fréquence maximale de ladite zone spectrale inférieure est inférieure à 1,7 MHz.

12. Signal de télévision étendu suivant la revendication 1, dans lequel ladite distance de Hamming binaire minimale du code de départ par rapport aux bits de données est de trois.

13. Décodeur de signaux de télévision étendus, comprenant :
des moyens (1) couplés pour recevoir un signal de télévision étendu (CVBS) comprenant des données d'image, des bits de signalisation pour acheminer des informations de commande pour commander des opérations de traitement quant auxdites données d'image, et pour synchroniser des informations (VCS), pour dériver lesdites informations de synchronisation (VCS) dudit signal de télévision étendu (CVBS);
des moyens (7) couplés pour recevoir lesdites informations de synchronisation (VCS) pour sélectionner une fenêtre de bits de signalisation;
des moyens (5, 11, 13) couplés pour recevoir ledit signal de télévision étendu pour décoder lesdits bits de signalisation pendant ladite fenêtre de bits de signalisation;
dans lequel, les bits de signalisation comprenant un code de départ et des bits de données, le lobe principal de l'énergie spectrale du code de départ réside dans la zone spectrale inférieure d'un signal de télévision de bande de base, ladite zone spectrale inférieure présentant une fréquence maximale inférieure à 2 MHz, le code de départ présentant un minimum spectral local à fréquence zéro, et le code de départ présente de bonnes propriétés de corrélation apériodiques du fait qu'une autocorrélation du code de départ, normalisé sur un maximum global de un pour un retard zéro, présente une différence d'au moins la moitié entre le maximum global et tout maximum local, et une distance de Hamming binaire minimale prédéterminée par rapport aux bits de données lorsqu'il est décalé dans la direction des bits de données suivant le code de départ ou sur ceux-ci, la distance de Hamming binaire minimale prédéterminée étant au moins de un.

14. Décodeur de télévision étendu suivant la revendication 13, dans lequel lesdits moyens de décodage de bits de signalisation (5, 11, 13) sont précédés d'un filtre passe-bas présentant une fréquence de coupure à ladite fréquence maximale.

15. Décodeur de télévision étendu suivant la revendication 13, dans lequel lesdits moyens de décodage de bits de signalisation (5, 11, 13) sont précédés d'un filtre passe-bas présentant un minimal spectral à la fréquence de sous-porteuse de chrominance et une réponse impulsionnelle s'approchant d'une représentation de domaine fréquentiel d'une impulsion élémentaire EP = cos² (π/2*t/(200 ns)) lorsque -200 ns ≤ t ≤ +200 ns, et EP = 0 partout ailleurs.

16. Décodeur de télévision étendu suivant la revendication 13, dans lequel lesdits moyens de décodage de bits de signalisation (5, 11, 13) sont précédés d'un filtre passe-bas présentant une réponse impulsionnelle [1221] ou [234432] à une fréquence d'échantillonnage de 13,5 MHz.

17. Décodeur de télévision étendu suivant la revendication 13, dans lequel lesdits moyens de décodage de bits de signalisation (5, 11, 13) comprennent un détecteur de code de départ (11) fonctionnant pendant une fenêtre de synchronisation de code de départ présentant une tolérance de synchronisation d'au moins ± 4 µs.

18. Décodeur de télévision étendu suivant la revendication 13, dans lequel lesdits bits de bits de signalisation comprennent en outre une partie initiale précédant ledit code de départ et lesdits moyens de décodage de bits de signalisation (5, 11, 13) comprennent un détecteur de code de départ (11) propre à détecter une combinaison dudit code de départ et d'une dernière partie de ladite partie initiale.

19. Décodeur de télévision étendu suivant la revendication 13, dans lequel lesdits moyens de décodage de bits de signalisation (5, 11, 13) comprennent un détecteur de code de départ (11) propre à détecter une séquence de code de départ qui est 1E 3C1F en notation hexadécimale.

20. Décodeur de télévision étendu suivant la revendication 13, dans lequel lesdits moyens de décodage de bits de signalisation (5, 11, 13) comprennent :
des moyens (57) pour déterminer si oui ou non une première pluralité de bits a été correctement reçue;
des moyens (63, 65) pour déterminer si oui ou non, parmi une deuxième pluralité de bits, au moins un nombre prédéterminé est exempt d'erreur.

21. Décodeur de télévision étendu suivant la revendication 13, dans lequel ledit détecteur de code de départ (11) comprend en outre :
des moyens (59, 61) pour déterminer si oui ou non ladite deuxième pluralité de bits contient une paire binaire autour d'une transitoire, paire binaire dont les deux bits sont inversés.

22. Procédé de décodage d'un signal de télévision étendu, procede comprenant les étapes suivantes:
recevoir (1) un signal de télévision étendu (CVBS) comprenant des données d'image, des bits de signalisation pour acheminer des informations de commande pour commander des opérations de traitement quant auxdites données d'image, et des informations de synchronisation (VCS), pour dériver lesdites informations de synchronisation (VCS) dudit signal de télévision étendu (CVBS);
sélectionner (7) une fenêtre de bits de signalisation en fonction desdites informations de synchronisation (VCS);
décoder (5, 11, 13) lesdits bits de signalisation pendant ladite fenêtre de bits de signalisation en réaction audit signal de télévision étendu (CVBS);
dans lequel, les bits de signalisation comprenant un code de départ et des bits de données, le lobe principal de l'énergie spectrale du code de départ réside dans la zone spectrale inférieure d'un signal de télévision de bande de base, ladite zone spectrale inférieure présentant une fréquence maximale inférieure à 2 MHz, et laquelle fréquence maximale est de préférence inférieure à 1,7 MHz, le code de départ présentant un minimum spectral local à fréquence zéro, et le code de départ présente de bonnes propriétés de corrélation apériodiques du fait qu'une autocorrélation du code de départ, normalisé sur un maximum global de un pour un retard zéro, présente une différence d'au moins la moitié entre le maximum global et tout maximum local, et une distance de Hamming binaire minimale prédéterminée par rapport aux bits de données lorsqu'il est décalé dans la direction des bits de données suivant le code de départ ou sur ceux-ci, la distance de Hamming binaire minimale prédéterminée étant au moins de un.
